Europäisches Patentamt

European Patent Office

Office européen des brevets

(11) Veröffentlichungsnummer: **0 320 584**
**A1**

## (12) EUROPÄISCHE PATENTANMELDUNG

(21) Anmeldenummer: 88115918.0

(22) Anmeldetag: 27.09.88

(51) Int. Cl.4: **C10L 5/40 , C10B 53/00**

(30) Priorität: 28.09.87 AT 2481/87

(43) Veröffentlichungstag der Anmeldung:
21.06.89 Patentblatt 89/25

(84) Benannte Vertragsstaaten:
**AT BE CH DE ES FR GR IT LI LU NL SE**

(71) Anmelder: **Puschauer, Franz**
**Zösenbergweg Nr. 36**
**A-8045 Graz(AT)**

(72) Erfinder: **Puschauer, Franz**
**Zösenbergweg Nr. 36**
**A-8045 Graz(AT)**

(74) Vertreter: **Collin, Hans, Dipl.-Ing. Dr. et al**
**Patentanwälte Dipl.-Ing. Dr. Hans Collin**
**Dipl.-Ing. Erwin Buresch Dipl.-Ing. Dr. Helmut**
**Wildhack Dipl.-Ing. Armin Häupl Mariahilfer**
**Strasse 50**
**A-1070 Wien(AT)**

(54) **Synthetisches Energieproduktverfahren wie Verfahren zur Anwendung und Entsorgung sämtlicher Müll-, Schlammstoffe aus lehmigen und tonigen Böden, Farberden und sämtliche Bergbauabraume und des Kohlebergbauabraumes (Taub).**

(57)

Kurzfassung

Technisches Problem der Erfindung = technische Aufgabe und Zielsetzung

Österreich hat sich im Zuge seiner Energiebeschaffung in eine gewisse Abhängigkeit begeben.
Die Umweltprobleme harren einer Lösung
Die Energiebeschaffung liegt derart, daß über dieses Verfahren dem Staate eines neutralen Österreichs Importsperren, Devisenmangel, krisenbedingte Lieferländerengpässe, uns nicht mehr schaden können, andererseits, wie erkannt und erprobt, mit diesem Umwandlungsverfahren die Müllprobleme eindeutig gelöst werden können.

Lösung des Problems bzw. der technischen Aufgabe

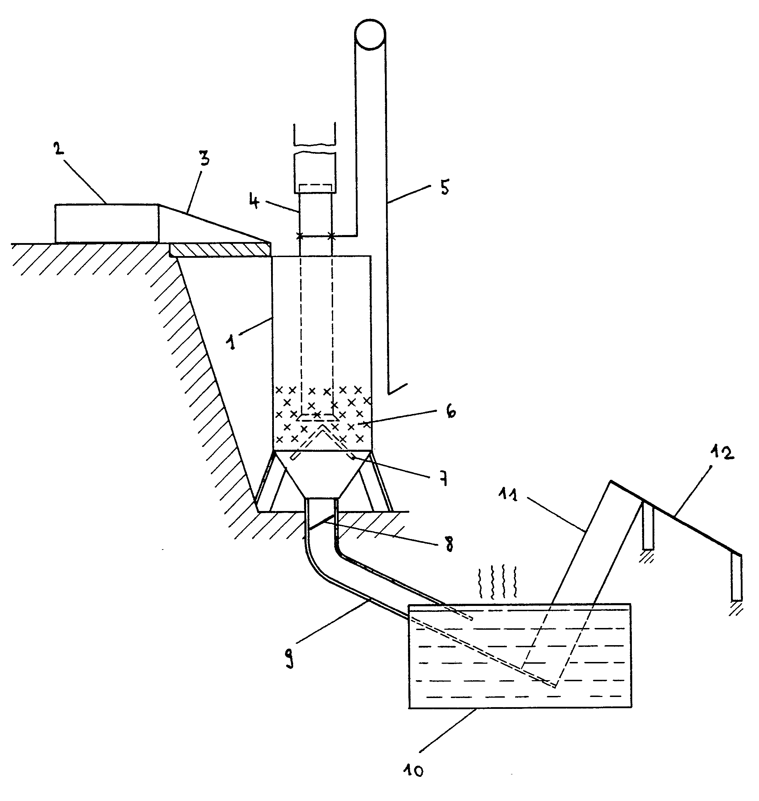

Die im Titel der Erfindung inkludierte erweiterte Anwendungsart in Verbindung mit der Vorrichtung (aus der beigefügten Zeichnung ersichtlich) wird an die Aufgabe herangegangen.

Anwendungsgebiete

EP 0 320 584 A1

Siehe Unteranspruch zum Hauptanspruch in der Patentbeschreibung 1. UA bis 15. UA

Siehe Unteranspruch zum Hauptanspruch in der Patentbeschreibung 1. UA bis 15. UA

### Synthetisches Energieproduktverfahren wie Verfahren zur Anwendung und Entsorgung sämtlicher Müll-, Schlammstoffe aus lehmigen und tonigen Böden, Farberden und sämtliche Bergbauabraume und des Kohlebergbauabraumes (Taub).

Diese Erfindung von Puschauer Franz jun., Graz 8045, Zösenbergweg 36, Steiermark, umfaßt in erster Linie die einmalige Erzwingung durch Umwandlung von Lehm und den weiteren genannten Grundstoffen, tonige Erden, Farberden, sämtliche Abraume der Bergbaue und des Kohlebergbauabraumes wie der Schlüsselkombination der Zumischung als Additiv von 0,5 % bei seltenen Erdeschichtungen wie bis über 3 % hinauf zu 15 %, im folgenden genannten Mineralien zu einem Festbrennstoff

Dazu bedarf es 3er Voraussetzungen zum Grundmaterial (Erden) usw.

1. Der Schlüsselkombination von 4 Mineralien im Fachjagon Siderit, Illit
   1. Serizit Chlorit (Feldspat)
   2. Eisenschüssiger Kalkschiefer (Plagioglas) hoher Oxydationsstufen, hohem Erdzeitalter
   3. Rauwacke
   4. Muskovit

Das Mineral 3 ........ ......... ........ ........ ..... 10 %

Die Mineralien 1/2/4 im Mittel im Additiv ................ 10 %

dies wiederum zu 30/30/30 auch starke Abweichung untereinander

2. Die Mischungsart gegenüber Ziegellehm voluminöser

3. Vorrichtung zum Zwecke der Durchführung des Verfahrens. Die vom Erfinder entwickelte Hochschachtofenanlage (Fig. A) mit unbedingt aufgebauter Beschleunigungsvorrichtung (Fig. AA)

Diese 3 Voraussetzungen werden auf den nächsten letzten Seiten in betonter Weise in Hauptpatentansprüchen ausgeschrieben.

Damit Sachverständige anhand der Patentbeschreibung damit umgehen können, beschreibt der Erfinder wie folgt:

In der Hochschachtofenanlage Fig. A hat man, um das Verfahren einleiten zu können, eine Grundwärme in der Form eines Stützfeuers (1) zur Überleitung auf dies darauf zu gebende Gemenge Tonerde Lehm usw. mit Punkt 1 der 3 Voraussetzungen als Additiv zu beschaffen.

(Beispiel)

1 Kesselanlage herkömmlicher Art.
Zur gedanklichen Übertragung auf Hochschachtton usw. Verkokungsanlage

Der Heiraum des Kessels faßt z.B. 100 kg Brennstoff Das Anheizen geschieht mit Papier, Holz, Kohle 10 kg + 30 kg Koks, die restlichen 60 kg Brennstoff werden für einen Tagesdauerbrand nachgegeben.

So im Verfahren im Vergleich 40 kg Grundfeuerstützmaterial (bezugnehmend auf die vorhin genannte Kohle und dem Koks mit ihrem Gewicht) in der statt 60 kg Tagesbrennstoff - 60 kg Lehm usw. als Gemenge eingesetzt werden.

Daß heißt, man geht so vor, indem man zuerst 5 kg nach Temperatursteigerung ca. ab 400 Grad des Schwelens, 2 x 10 kg Gemenge nachgibt.

Die Zirkulation wird in der Vorrichtung zum Zwecke der Erzeugung des SEP am Beginn so eingeleitet, daß die Strömung von Ofenoberkante nach "unten" Beschleunigerunterkante und von hier wieder nach oben Beschleunigerende verläuft.

Nach weiterer Temperatursteigerung (ca. 2 Stunden) werden 15 kg Gemenge und wiederum nach 2 Stunden ca. 20 kg Gemenge eingebracht.

Auf diese Weise werden nach mehreren Stunden bereits 60 kg Gemenge zum SEP sich entwickelt haben, bis zum etwaigen Höchstgewichtsverlust 30 kg SEP entstanden sind.

Ergebnis

1. Mit Reststützfeuer 15 kg + 30 kg SEP sind 45 kg Stützfeuer, wobei in der weiteren Folge bei Eingabe von 100 kg Gemenge zumindest 50 kg SEP entstanden sein müßte.

2. Mit wiederum Reststützfeuer 15 kg + 50 kg SEP

Die Beispielsfolge wird weiters fortgesetzt, indem ich anführe:
60 kg SEP - als Stützfeuer zu 200 kg Gemenge wiederum zu 100 kg SEP (wobei je nach Bodenmasse auch bereits 180 kg gewonnen werden könnten)
30 kg Rest SEP + 100 kg SEP sind 130 kg SEP
130 kg SEP - als STützfeuer zu 400 kg Gemenge bringt wiederum im mindesten 200 kg SEP, wobei z.B. bei 70 kg Rest SEP + 200 kg SEP, somit 270 kg SEP als Stützfeuer zu 700 bis 800 kg Gemenge mindestens 350 kg bis 400 kg SEP (sogar 700 kg SEP) schon entstanden sein können.

Diese Art der Beispielsfolge wurde zum Verständnis einer kleinsten Abführung vorgebracht.

Die gewerbliche Nutzung wird natürlich in der vom Erfinder erkannten Grundgrößenordnung ab 20 m$^3$ grundsätzlich zur Erzeugung aufgebaut.

Der Beschleuniger soll gut auf die 6fache Länge des Ofenkörpers erstellt werden.

Der Auftrieb von 10 cm pro Sekunde ab Wärmeabführung auf gut 3 m pro Sekunde gebracht werden, wobei die Turbulenzen und Zirkulationen wie am Beginn meiner Beschreibung angeführt, erliegen müssen durch die vielen, vielen Tonnagen der einzubringenden Massenströme der gemischten Erden zur Umwandlung.

**Ansprüche**

1. Patentanspruch = 1. Hauptanspruch
In dem Oberbegriff - Synthetisches Energieproduktverfahren wie Verfahren zur Anwendung und Entsorgung sämtlicher Müllstoffe in Verbindung mit lehmigen tonigen Erdemassen, Farberden, Abraume der Bergbaue und des Kohleabraumes Taub
dadurch gekennzeichnet, daß das zum Patent angemeldete Verfahren mit den genannten Grundstoffen (Erden bis 90 %) dreier Maßnahmen bedarf.

2. Patentanspruch = 2. Hauptanspruch = 1. der mineralischen Schlüsselkomponente - Zugabebedarf (Additiv)

3. Patentanspruch = 3. Hauptanspruch = 2. der besonderen Mischungsart

4. Patentanspruch = 4. Hauptanspruch = 3. der Vorrichtung (Fig.A) einer mit Beschleunigungsvorrichtung (Fig. AA)
In dem Oberbegriff, bezugnehmend auf die vier vorhin genannten Patentansprüche als Haupteinsprüche a b c d. darf ich in Übereinstimmung mit dem Titel der Erfindung nochmals wiederholen, daß das Verfahren zum Zwecke der Erzeugung des synthetischen Energieproduktes (a) gleichfalls das Entsorgungssystem sämtlicher Müll (b), Sondermüll (c) und (d) Klärschlammmassen bedeutet.
Geschehen tut dies durch Zumischen dieser Substanzen zwischen 20 bis 60 %.
Die Unteransprüche sind zu den Hauptansprüchen dadurch gekennzeichnet, daß das Verfahren, wie auch das SEP, umweltfreundlich ist.

1. UA daß das Verfahren eine zukunftsweisende Kraftwerksbefeuerung darstellt (höchster Abwärmenutzungsgrad)

2. UA ein Kontainerheizsystem darstellen vermag

3. UA daß das SEP-Verfahren ein Krisenvorsorgeenergieverfahren und Notenegerieversicherungssystem bedeutet.

4. UA daß das SEP (Synthetisches Energieprodukt) ein wertvolles Elektrodenmaterial darstellt

5. UA ein neues Kontaktmaterial wie ein neues Pulvermaterial mit gänzlich Neuem interessanten Niedrigwiderstandsverhalten erkannt wurde

6. UA Beleuchtungswiderstands-Material anderer Leuchtdichten

7. UA ausgeprägtes Umweltschutzverfahren

8. UA Kraftwerksbefeuerung, Zufeuerung zu herkömmlichen Brennstoffen ebenfalls geeignet

4

9. UA Galvanotechnik "neu"

10. UA Aluminium-Schweißen <u>ohne</u> <u>Schutzgas</u>

11. UA Filtermaterial

12. UA Ölbindemittel

13. UA Bodenverbesserer für Landwirtschaft und Gärtnereien

14. UA als Pigmentfarbstoff

15. UA Rohaluminiumgewinnungs-Methode

| Europäisches Patentamt | **ERKLÄRUNG,** die nach Regel 45 des Europäischen Patent-übereinkommens für das weitere Verfahren als europäischer Recherchenbericht gilt | Nummer der Anmeldung EP 88 11 5918 |

Nach Auffassung der Recherchenabteilung entspricht die vorliegende europäische Patentanmeldung den Vorschriften des Europäischen Patentübereinkommens so wenig, daß es nicht möglich ist, auf der Grundlage aller Patentansprüche sinnvolle Ermittlungen über den Stand der Technik durchzuführen.

Grund:

Die Bezeichnung, die Zusammenfassung, die Beschreibung, die Abbildung und die Patentansprüche sind unklar.

**KLASSIFIKATION DER ANMELDUNG (Int. Cl.4)**

C 10 L 5/40
C 10 B 53/00

| Recherchenort | Abschlußdatum der Recherche | Prüfer |
|---|---|---|
| Den Haag | 23-01-1989 | MEERTENS |

EPA Form 1504 06.78